# EUROPEAN PATENT APPLICATION

(11) **EP 3 708 392 A1**
(43) Date of publication of application: **16.09.2020**
(21) Application number: 20161358.5
(22) Date of filing: 06.03.2020
(51) Int. Cl.: B60G 7/00, B60G 7/02, F16F 1/38

(54) **A SUSPENSION ARM ELEMENT**

(30) Priority: 12.03.2019 TR 201903712
(71) Applicant: Ditas Dogan Yedek Parca Imalat Ve Teknik Anonim Sirketi, Nigde (TR)
(72) Inventor: TUNC, OZKAN, NIGDE (TR)
(74) Representative: Kaya, Erdem

(57) **Abstract**

The present invention is at least one suspension arm element (10) particularly for use in suspension arms (1) of vehicles and having at least one hinge (20), at least one bushing (30) which encircles said hinge (20) and at least one washer (40) which at least partially covers the open side of said bushing (30). The improvement of the present invention is that at least one hole (31) is provided on the bushing (30) in order to provide filling rubber (60) between the hinge (20) and the bushing (30).

## Description

### TECHNICAL FIELD

The present invention relates to at least one suspension arm element particularly for use in suspension arms of vehicles and having at least one hinge, at least one bushing which encircles said hinge, and at least one washer which at least partially covers the open side of said bushing.

### PRIOR ART

In vehicles, there are various suspension embodiments for dampening the vibrations which occur during travelling. In vehicles, suspension arms are frequently used in the connection of the axle shaft and wheel. Suspension arm is basically formed by bringing together four parts. Suspension bushings are used at the connection points of suspension arms. Suspension bushings partially absorb vibration and provide affecting of the suspension arm in a reduced manner by making minor angles on the arm. In the present art, suspension bushing designs are produced by coating rubber on the outer side of a shaft having connection points from the two sides.

In vehicles used in defense industry, it is expected that the functions of products are improved since the military conditions are harsh. The vehicles in defense industry consume 95% of their usage lifetime in military practices. Since defense industry vehicles are mostly used in harsh terrain conditions, the movement realized by the wheels during positioning of the wheels on the floor leads to a big angle between the axle shaft and the suspension arms and leads to excessive force loadings. This leads to excessive-usage of the suspension bushing and the following problems occur:
- Noise problem is faced
- Comfortable driving cannot be provided
- Limit values cannot be obtained in test specifications
- Safety coefficient decreases
- Usage lifetime is low.

In order to overcome such problems, in the patent with number US6231264 (B1) in the present art, a suspension bushing is disclosed. Accordingly, there is additionally a metallic layer at the outer part of the rubber material around the shaft in the suspension bushing. The usage lifetime is tried to be increased by means of this, however, it has not been sufficient.

As a result, because of all of the abovementioned problems, an improvement is required in the related technical field.

### BRIEF DESCRIPTION OF THE INVENTION

The present invention relates to a suspension arm element, for eliminating the above mentioned disadvantages and for bringing new advantages to the related technical field.

An object of the present invention is to provide a suspension arm element with eliminated noise problem, with increased corrosion resistance and with long lifetime.

Another object of the present invention is to provide a suspension arm element with facilitated production method.

In order to realize the abovementioned objects and the objects which are to be deducted from the detailed description below, the present invention is at least one suspension arm element particularly for use in suspension arms of vehicles and having at least one hinge, at least one bushing which encircles said hinge and at least one washer which at least partially covers the open side of said bushing. Accordingly, at least one hole is provided on the bushing in order to provide filling rubber between the hinge and the bushing. Thus, the rubber is injected between the hinge and bushing in a controlled manner.

In a possible embodiment of the present invention, the hinge has at least one spherical part. Thus, the load, exerted on the bushing and on the rubber, is distributed on the wide surface in case of force loading to be exerted onto the hinge and plastic deformation is prevented.

In a possible embodiment of the present invention, rubber-metal adhesive is provided in at least one part of the hinge. Thus, the rubber is adhered in a better manner onto the hinge.

In a possible embodiment of the present invention, said rubber-metal adhesive is a chemosil. Thus, the rubber is adhered onto the hinge in a better manner.

in a possible embodiment of the present invention, at least one part of the bushing is rough area. Thus, the rubber is prevented from being deteriorated while bending with respect to the bushing.

In a possible embodiment of the present invention, it is at least partially coated. Thus, the resistance of the suspension arm element is increased against corrosion.

The present invention is moreover characterized by comprising coating rubber-metal adhesive to at least one part of the hinge before the bushing is positioned around thereof such that the bushing is essentially in the same axis with the hinge, coating the open side of the bushing by said washer and injecting rubber between the hinge and the bushing through at least one hole positioned on the bushing.

In a possible embodiment of the present invention, at least one part of the bushing is made as a rough area before positioning of the bushing around thereof such that the bushing is essentially in the same axis with the hinge. Thus, the adhesion proportion which occurs between the bushing and the rubber is reduced with respect to the smooth surface and movement easiness is increased.

In a possible embodiment of the present invention, a coating process is applied after the rubber is injected between the hinge and the bushing through the hole. Thus, resistance of the suspension arm element against corrosion is increased and long lifetime is provided to the suspension arm element.

### BRIEF DESCRIPTION OF THE FIGURES

Figure 1 is a representative perspective view of a suspension arm where the subject matter suspension arm element is positioned.
Figure 2 is a representative cross-sectional view of the subject matter suspension arm element.

### DETAILED DESCRIPTION OF THE INVENTION

In this detailed description, the subject matter suspension arm element (10) is explained with references to examples without forming any restrictive effect only in order to make the subject more understandable.

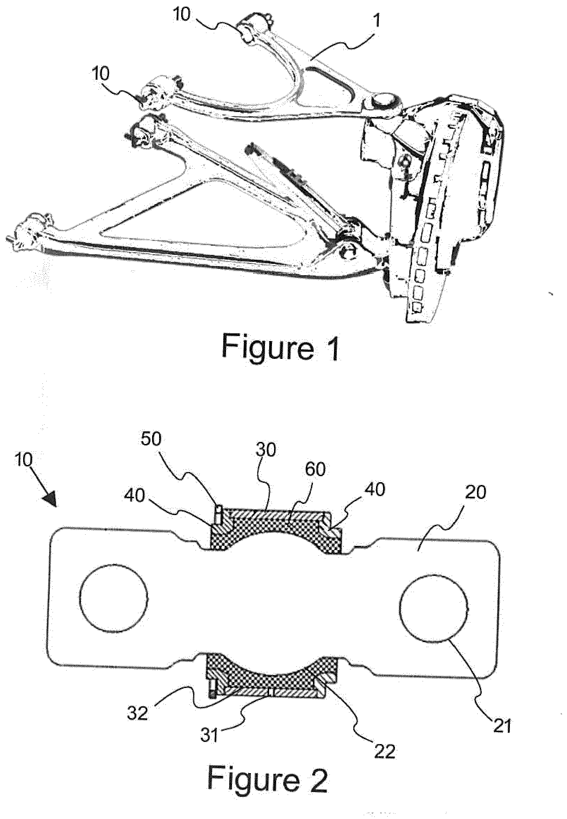

In Figure 1, a representative perspective view of a suspension arm (1) where the subject matter suspension arm element (10) is positioned is given. Accordingly, the suspension arm element (10) provides connection of said suspension arm (1) to the axle shaft. In Figure 2, a representative cross-sectional view of the subject matter suspension arm element (10) is given. Accordingly, the suspension arm element (10) has at least one hinge (20) and at least one bushing (30) which encircles said hinge (20). At least one rubber (60) is positioned between the hinge (20) and the bushing (30). In other embodiments of the present invention, said rubber (60) can also be a different material which can absorb energy and which has high flexibility. Moreover, at least one each washers (40) are positioned at the two open sides of the bushing (30). At least one each rings (50) are used for preventing free movement of said washers (40) along the hinge (20). Thanks to this, essentially closed volume is obtained between the bushing (30) and the hinge (20).

At least one each hinge holes (21) are positioned at both sides of the hinge (20) and it essentially has a spherical part (22) in the middle part thereof. Said hinge holes (21) provide bedding for the connection elements for providing connection of the suspension arm (1) to the axle shaft. Said spherical part (22) provides spreading and distributing of force onto the rubber (60) and onto the bushing (30) in case of instantaneous force loading to the suspension arm element (10). Essentially steel-based metal is used as the hinge (20) material, and thermal process is applied during production. As thermal process is applied, the inner tensions inside the hinge (20) are eliminated and the deteriorations inside the particle are eliminated. Moreover, induction hardening is applied particularly to the spherical part (22) on the hinge (20). By means of induction hardening, particularly the hardness of the outer part of the spherical part (22) is increased with respect to the inner part thereof. The inner part of the spherical part (22) has hardness between 32-36 HRC and the hardness of the outer part of the spherical part (22) having width of 1.5 mm is increased to between 60-62 HRC. By means of this, in case of instantaneous force loading which may be exerted onto the hinge (20), plastic deformation is prevented and the toughness of the hinge (20) is protected. Besides, the hinge (20) is at least partially coated with rubber-metal adhesive. In a preferred embodiment of the present invention, the rubber-metal adhesive is the chemosil application known in the art. By means of this, the efficiency of adhesion of the rubber (60) around the hinge (20) is increased.

There is an at least partially rough area (32) at the inner part of the bushing (30). In a preferred embodiment of the present invention, whole of the inner part is rough area (32). Thanks to the rough area (32), the complete adhering of the rubber (60) to the bushing (30) is prevented and approximately 75% adhesion is provided. The complete adhesion of the rubber (60) to the bushing (30) is prevented and movement functionality is provided to the suspension arm element (10), and the undesired sounds which may occur during operation thereof are prevented. At least one hole (31) is provided on the bushing (30). Said hole (31) is an opening which provides injection of the rubber (60) between the bushing (30) and the hinge (20). Moreover, the washers (40) positioned at the open sides of the bushing (30) are configured to provide making preferably an angle of 18° by the hinge (20) with respect to the bushing (30).

In the production of the suspension arm element (10), first of all, the bushing (30) is engaged around the spherical part (22) existing on the hinge (20). Washers (40) are fixed to the two open sides of the bushing (30) by means of the ring (50). The rubber (60) is filled between the hinge (20) and the bushing (30) preferably by means of injection method through the hole (31) existing on the bushing (30). While the rubber (60) is being injected between the bushing (30) and the hinge (20), it is important for the usage lifetime whether the rubber (60) has the same wall thickness around its own axis. Therefore, when placed therein, rubber (60) is filled in the vulcanized mold where the bushing (30) and the hinge (20) can have the same axis. During production by means of the injection method, the step of positioning of the bushing (30) around the hinge (20) with respect to the rubber (60) is eliminated. After the injection of the rubber (60) is completed, stoning process is applied to the outer periphery of the bushing (30). By means of the stoning process, the suspension arm element (10) is placed to the suspension arm (1) with tight fit tolerances. After stoning, coating is applied to the suspension arm element (10) and the suspension arm element (10) is turned into a form which is suitable to ISO 9227, ASTM B 117 and defense specifications.

During production of the suspension arm element (10), production of the product is facilitated and optimum operation conditions are provided by means of the injection method and tight fit is provided to the suspension arm (1) by means of the stoning method. Besides, by means of the coating method, the suspension arm element (10) becomes suitable to the usage criteria, and obtains high corrosion resistance and long lifetime.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

1 Suspension arm
10 Suspension arm element
20 Hinge
   21 Hinge hole
   22 Spherical part
30 Bushing
   31 Hole
   32 Rough area
40 Washer
50 Ring
60 Rubber

## Claims

1. At least one suspension arm element (10) particularly for use in suspension arms (1) of vehicles and having at least one hinge (20), at least one bushing (30) which encircles said hinge (20) and at least one washer (40) which at least partially covers the open side of said bushing (30), **wherein** at least one hole (31) is provided on the bushing (30) in order to provide filling rubber (60) between the hinge (20) and the bushing (30).

2. The suspension arm element (10) according to claim 1, **wherein** the hinge (20) has at least one spherical part (22).

3. The suspension arm element (10) according to claim 1, **wherein** rubber-metal adhesive is provided in at least one part of the hinge (20).

4. The suspension arm element (10) according to claim 3, **wherein** said rubber-metal adhesive is a chemosil.

5. The suspension arm element (10) according to claim 1, **wherein** at least one part of the bushing (30) is rough area (32).

6. The suspension arm element (10) according to claim 1, **wherein** it is at least partially coated.

7. The suspension arm element (10) production method according to claim 1, **wherein** said production method comprises coating rubber-metal adhesive to at least one part of the hinge (20) before the bushing (30) is positioned around thereof such that the bushing (30) is essentially in the same axis with the hinge (20), coating the open side of the bushing (30) by said washer (40) and injecting rubber between the hinge (20) and the bushing (30) through at least one hole (31) positioned on the bushing (30).

8. The suspension arm element (10) production method according to claim 7, **wherein** at least one part of the bushing (30) is made as a rough area (32) before positioning of the bushing (30) around thereof such that the bushing (30) is essentially in the same axis with the hinge (20).

9. The suspension arm element (10) production method according to claim 7, wherein a coating is applied after rubber (60) is injected between the hinge (20) and the bushing (30) through the hole (31).
